# DEMANDE DE BREVET EUROPEEN

(11) **EP 2 876 038 A1**
(43) Date de publication de la demande: **27.05.2015**
(21) Numéro de dépôt: 14290335.0
(22) Date de dépôt: 07.11.2014
(51) Int. Cl.: B63C 11/52, G01V 1/38, B08B 9/023, B63B 35/00

(54) **Dispositif de maintenance permettant un nettoyage d'une flûte sismique**

(30) Priorité: 20.11.2013 FR 1302677
(71) Demandeur: Kappa Offshore Solutions Marine Operations Service, 64100 Bayonne (FR)
(72) Inventeur: Choquer, Thibaut, 65100 Bayonne (FR); Delecraz, Sébastien, 65100 Bayonne (FR)
(74) Mandataire: Célanie, Christian

(57) **Abrégé**

L'invention concerne un dispositif de maintenance (1) comprenant un corps (2) relié à un outil de maintenance (21) appliqué le long d'une flûte sismique (4) déployée à la surface de l'eau ou à faible profondeur, l'outil de maintenance (21) comprenant un passage dans lequel la flûte sismique (4) coulisse pour son entretien. Le corps (2) est notamment un corps flottant sur l'eau (3), le dispositif de maintenance (1) comprenant au moins :
- un système propulseur (5, 6, 7) piloté par un module de commande (8),
- un support (28) de l'outil de maintenance (21) solidaire du corps (2) et supportant l'outil de maintenance (21) dans au moins une position fixe et déportée latéralement par rapport au corps.

## Description

Le secteur technique de la présente invention est celui des travaux de maintenance effectués sur les structures installées en milieu aquatique. La présente invention concerne notamment les opérations d'entretien ou de réparation des flûtes sismiques tractées en mer par un navire laboratoire et servant pour l'analyse du sous-sol marin.

Les flûtes sismiques, également désignées par streamers, sont des antennes acoustiques remorquées par un navire laboratoire de surface ou sous-marin, notamment pour la prospection pétrolière. Une flûte sismique est constituée d'un assemblage de sections de plusieurs dizaines de mètres de long chacune et comprenant chacune une pluralité de capteurs sismiques ainsi que des composants électroniques associés pour former une antenne acoustique linéaire. Un navire laboratoire peut notamment déployer plusieurs flûtes sismiques de plusieurs kilomètres chacune. L'ensemble de ces flûtes sismiques constitue un réseau de flûtes sismiques tractées chacune par le navire laboratoire.

Le navire laboratoire tracte également une ou plusieurs sources sismiques capables de générer un signal source adapté à l'acquisition sismique. Une source sismique est par exemple constituée d'un réseau de canons à air immergés. L'acquisition de données géophysiques est réalisée par les capteurs des flûtes sismiques se présentant généralement sous la forme d'hydrophones. L'onde de pression générée par la source sismique traverse la colonne d'eau jusqu'au fond marin. Cette onde sismique est réfléchie ou réfractée par le fond marin et par les structures géologiques sous-jacentes. L'onde renvoyée représentative de la structure du fond sous-marin peut ainsi être analysée et exploitée.

Les campagnes d'exploration sismiques peuvent être programmées sur des périodes s'étendant sur plusieurs semaines ou plusieurs mois. Les flûtes sismiques restent donc immergées pendant une durée importante au cours de laquelle les flûtes sismiques subissent des contraintes et peuvent être endommagées. Les flûtes sismiques peuvent également rester déployées même si les conditions météorologiques ne permettent pas les mesures par réflexion d'ondes acoustiques.

De plus des organismes se développent sur les flûtes sismiques au cours de leur immersion. Les flûtes sismiques sont en effet généralement immergées à faible profondeur de un à quelques mètres voire quelques dizaines de mètres et sont trainées à des vitesses faibles comprises entre 3 et 6 noeuds. Les flûtes sismiques sont donc particulièrement sujettes à l'encrassement dû à la formation d'un biofilm et à la prolifération de petits organismes marins tels que les pouces-pieds ou les bernacles. D'une part cet encrassement augmente la trainée des flûtes sismiques et réduit leur durée de vie. D'autre part l'encrassement des flûtes sismiques perturbe les mesures notamment du fait des bruits parasites d'écoulements hydrodynamiques ce qui peut nécessiter le remplacement de la flûte sismique ou d'au moins une section de cette dernière.

On connaît les brevets GB-2430142, US-2008/0127875 et FR-2847987 qui décrivent chacun un module autonome comprenant des moyens de guidage autour d'une flûte sismique et des moyens d'appui sur l'eau permettant d'une part un déplacement du module autonome par rapport à la flûte sismique et d'autre part l'actionnement de brosses de nettoyage de la flûte. Ces modules autonomes sont cependant complexes à fabriquer et à mettre en oeuvre et sont de plus difficilement récupérables en cas de panne.

La présente invention a pour but de pallier les inconvénients de l'art antérieur en fournissant un dispositif de maintenance présentant une structure plus efficace et plus simple à mettre en oeuvre.

Cet objectif est atteint grâce à un dispositif de maintenance comprenant un corps relié à un outil de maintenance appliqué le long de d'une flûte sismique déployée à la surface de l'eau ou à faible profondeur, l'outil de maintenance comprenant un passage dans lequel la flûte sismique coulisse pour son entretien, caractérisé en ce que le corps est un corps flottant sur l'eau, le dispositif de maintenance comprenant au moins :
- un système propulseur piloté par un module de commande,
- un support de l'outil de maintenance solidaire du corps et supportant l'outil de maintenance dans au moins une position fixe et déportée latéralement par rapport au corps.

Selon une particularité de l'invention, l'outil de maintenance comprend au moins une brosse ou un système de pulvérisation agissant sur la flûte sismique coulissant dans le passage de l'outil de maintenance.

Selon une autre particularité de l'invention, le support comprend au moins un élément mobile en translation sensiblement parallèlement à une plateforme d'intervention aménagée sur le corps, l'outil de maintenance étant mobile selon une direction transversale à la direction d'avance du dispositif de maintenance.

Selon une autre particularité de l'invention, le dispositif de maintenance comprend au moins un bras de levage à l'extrémité duquel est fixé un préhenseur.

Selon une autre particularité de l'invention, le bras de levage et le préhenseur sont agencés de façon à permettre au moins un positionnement du préhenseur dans l'alignement de l'outil de maintenance et un positionnement du préhenseur décalé latéralement par rapport à l'outil de maintenance.

Selon une autre particularité de l'invention, le bras de levage et le préhenseur sont agences de façon à permettre au moins un positionnement du préhenseur à la hauteur de l'outil de maintenance et un positionnement du préhenseur décalé en hauteur par rapport à l'outil de maintenance.

Selon une autre particularité de l'invention, le bras de levage est un bras articulé mobile selon plusieurs axes et comprend une portion télescopique extensible à l'extrémité de laquelle est fixé le préhenseur.

Selon une autre particularité de l'invention, le dispositif de maintenance comprend un système de localisation de la flûte sismique transmettant au module de commande un signal représentatif de la position du dispositif de maintenance par rapport à ladite flûte en fonction duquel le module de commande pilote une distance et une vitesse d'intervention entre ladite flûte sismique et le corps du dispositif de maintenance.

Selon une autre particularité de l'invention, le système de localisation comprend au moins un émetteur et un récepteur hydroacoustiques fixés au corps et en communication avec au moins une balise fixée à ladite flûte sismique, le signal transmis par le système de localisation étant représentatif d'une position et d'une vitesse du dispositif de maintenance par rapport à ladite balise dans un repère à au moins deux dimensions.

Selon une autre particularité de l'invention, le module de commande règle automatiquement la vitesse du dispositif de maintenance par rapport à celle de la flûte sismique en fonction du signal représentatif de la position du dispositif de maintenance par rapport à ladite flûte.

Selon une autre particularité de l'invention, le système propulseur comprend au moins un hydrojet.

Un tout premier avantage est que le nettoyage d'une flûte sismique peut-être réalisé de façon sécurisée, sans risque de perdre l'outil de nettoyage.

Un autre avantage de la présente invention réside dans le fait que le dispositif de maintenance a une efficacité accrue.

Encore un autre avantage réside dans le fait que le nettoyage peut être contrôlé visuellement et les opérations peuvent être interrompues en cas de problème.

Un autre avantage de la présente invention réside dans le fait que le dispositif de maintenance peut accomplir différentes fonctions pour le nettoyage. Le nettoyage peut notamment être effectué par une pulvérisation.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente une vue générale d'un navire laboratoire et d'un dispositif de maintenance ;
- la figure 2 représente une vue en perspective d'une unité de contrôle et de guidage d'une flûte sismique;
- la figure 3 représente une vue en coupe longitudinale d'une ligne sismique ;
- la figure 4 représente une vue en perspective d'un flotteur disposé en début ou en fin de flûte sismique ;
- la figure 5 représente schématiquement une vue de côté d'un dispositif de maintenance positionné à côté d'une flûte sismique ;
- la figure 6 représente une vue de face d'un système de localisation hydroacoustique installé sous la coque du dispositif de maintenance ;
- les figures 7 et 8 représente chacune une vue de dessous d'un dispositif de maintenance dans lequel est aménagé un système propulseur non offensif pour les flûtes sismiques;
- la figure 9 représente une vue de côté d'un système actif de stabilisation antiroulis pouvant être installé à bord du dispositif de maintenance ;
- la figure 10 représente schématiquement, en vue de dessus, le dispositif de maintenance équipé d'un outil de maintenance et d'un bras de levage muni d'un préhenseur ;
- la figure 11 représente schématiquement, en vue de côté, une flûte sismique traînée par un navire laboratoire de surface et saisie par un dispositif de maintenance ;
- la figure 12 représente une vue en perspective arrière d'un dispositif de maintenance ;
- les figures 13 à 17 représentent différentes positions du préhenseur installé à l'extrémité d'un bras de levage;
- les figures 18 et 19 représentent chacune un outil de maintenance utilisé pour le nettoyage de la flûte sismique;
- les figures 20 et 21 représentent un outil de maintenance utilisé pour le remorquage d'une flûte sismique ;
- la figure 22 représente une vue partielle en perspective d'un dispositif de maintenance lors de la saisie sous l'eau d'une flûte sismique par le préhenseur;
- la figure 23 représente une vue partielle en perspective d'un dispositif de maintenance soulevant une flûte sismique au-dessus de l'eau ;
- la figure 24 représente une vue partielle en perspective d'un dispositif de maintenance lors du positionnement de la flûte sismique au-dessus du réceptacle de l'outil de maintenance;
- la figure 25 représente une vue partielle en perspective d'un dispositif de maintenance lors du maintien de la flûte sismique dans une zone d'intervention ;
- la figure 26 représente une vue partielle en perspective d'un dispositif de maintenance lors du traitement de la flûte sismique par un coulissement dans l'outil de maintenance;
- la figure 27 représente une vue partielle en perspective d'un dispositif de maintenance lors du remorquage d'une section de la flûte sismique ;
- la figure 28 représente schématiquement un exemple de module de commande pour le contrôle et le positionnement du dispositif de maintenance;
- les figures 29 à 31 sont des représentations graphiques de données de localisation.

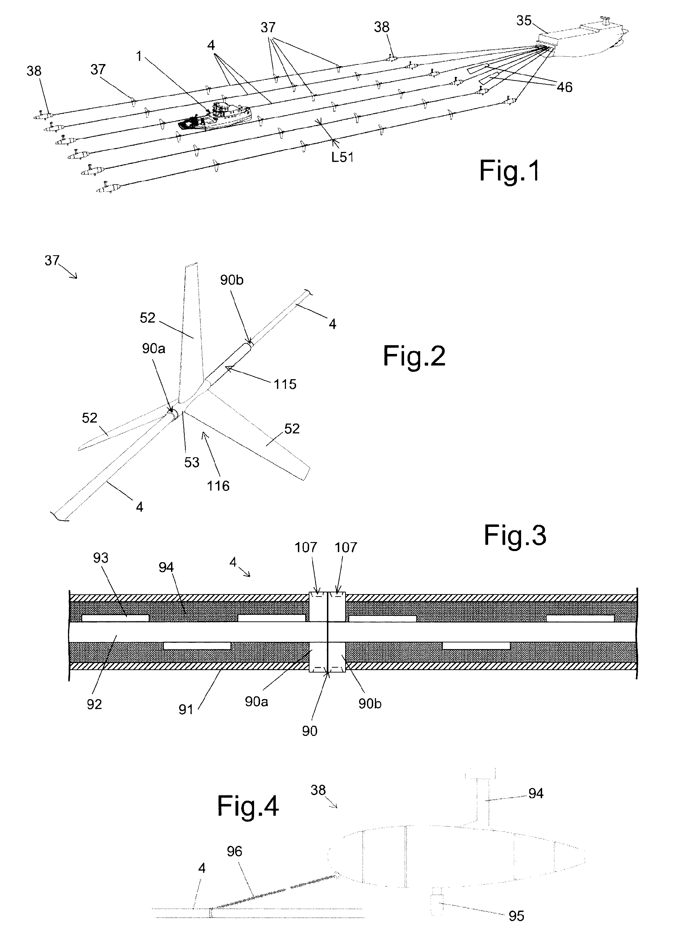

L'invention va à présent être décrite avec davantage de détails. La figure 1 représente une vue générale du navire laboratoire 35 traînant des flûtes sismiques 4 ainsi que des sources sismiques 46. Le navire laboratoire 35 est relié aux flûtes sismiques reliées chacune par des amarres aux flotteurs 38 disposés en début de chaque flûte sismique.

Un flotteur 38 est fixé en début et en fin de chaque flûte sismique 4. Chaque flotteur 38 tracté par une flûte sismique 4 comprend généralement un système de positionnement hydroacoustique, un système de positionnement par satellite ainsi qu'un système de communication avec le navire laboratoire 35. Ce flotteur 38 en communication avec le navire laboratoire 35 peut ainsi transmettre des données représentatives de la position du début et de la fin de la flûte sismique 4 à laquelle il est fixé.

Des unités 37 de contrôle et de guidage d'une flûte sismique sont disposées le long de chaque flûte sismique 4. Ces unités 37 de contrôle et de guidage comprennent généralement un système de positionnement hydroacoustique, système de mesure de profondeur ainsi qu'un système de communication avec le navire laboratoire 35.

Les unités 37 de contrôles et de guidage comprennent un organe 115 de localisation et de communication relié à un organe 116 de guidage. Une unité de contrôle et de guidage 37 est disposée entre deux demi-connecteurs 90a et 90b.

Ces unités 37 de contrôle et de guidage réalisent notamment un guidage vertical et latéral de la flûte sismique 4 dans l'eau et communiquent avec le navire laboratoire 35. Les données transmises entre le navire laboratoire 35 et les unités de contrôle et de guidage 37 sont représentatives de la position de chaque unité de contrôle et de guidage 37. La position de ces unités 37 peut se présenter sous la forme d'un ensemble de données représentatives de leur longitude, leur latitude et leur profondeur, ces données étant générées par le système de localisation et le système de mesure de profondeur.

Les unités 37 de contrôle et de guidage peuvent échanger des signaux de contrôle avec le navire laboratoire et ainsi être positionnées par rapport au navire laboratoire 35 et également les unes par rapport aux autres en échangeant entre elles des signaux de contrôle.

Le navire laboratoire 35 repère également la position du dispositif de maintenance 1. Le dispositif de maintenance 1 est par exemple détecté par un système hydroacoustique du navire laboratoire. Le dispositif de maintenance peut également comprendre un système de géolocalisation par satellite et communiquer sa position au navire laboratoire 35.

Ainsi la configuration générale du réseau de flûtes sismiques de la figure 1 est contrôlée par le navire laboratoire 35 et celui-ci peut transmettre, au dispositif de maintenance 1, un signal représentatif de cette configuration générale.

Il apparaît notamment une distance L51 entre deux flûtes sismiques voisines. Cette longueur L51 séparant deux flûtes sismiques 4 est par exemple comprise entre 50m et 200m et par exemple de 100m environ. Ainsi le dispositif de maintenance 1 peut se repérer dans le réseau de flûtes sismiques 4 et se diriger entre deux flûtes sismiques.

Chaque flûte sismique 4 est déployée à la surface de l'eau ou à faible profondeur. La profondeur de la flûte sismique ou les profondeurs de sections d'une flûte sismique peuvent être commandées par le navire laboratoire 35. Le navire laboratoire peut à cet effet transmettre aux unités 37 de contrôle et de guidage, des signaux de commande de la hauteur de chacun de ces dispositifs 37. Ainsi une flûte sismique ou des sections d'une flûte sismique peuvent être rapprochées de la surface de l'eau.

Comme représenté à la figure 2, l'unité 37 de contrôle et de guidage comprend des ailes 52 de guidage dans l'eau. La position de ces ailes peut être réglée pour positionner les sections de flûte sismique auxquelles est fixée cette unité 37 de contrôle et de guidage. Les ailes 52 peuvent par exemple être remplacées ou réparées lors d'opérations de maintenance.

Le corps 53 de l'organe 116 de guidage auquel se rattachent les ailes 52 est fixé au corps de l'organe 115 de localisation et de communication. Ces corps bout-à-bout sont fixés entre deux sections de flûte consécutives grâce aux demi-connecteurs 90a et 90b à leur extrémité. Les systèmes de localisation ou de communication sont aménagés dans le corps de l'organe 115 de localisation et de communication.

Comme représenté à la figure 3, les flûtes sismiques sont organisées en sections jointes bout-à-bout par des connecteurs 90. La flûte sismique comprend une enveloppe extérieure 91 disposée autour d'un noyau central 92 et de capteurs 93. Les capteurs 93 sont reliés au noyau central 92 qui réalise les fonctions d'interface de communication et de traction mécanique. Le noyau central se présente par exemple sous la forme d'un renfort central autour duquel sont aménagés des câbles électriques de communication ou d'alimentation en énergie électrique. Un matériau 94 rempli l'intérieur de la gaine 93 pour protéger les capteurs sismiques 93 tout en leur transmettant les vibrations de mesure. Le matériau de remplissage 94 peut aussi conférer à la flûte sismique une flottabilité déterminée. Le matériau de remplissage se présente par exemple sous la forme d'un liquide, d'un fluide, d'une mousse ou d'un matériau solide élastique.

La solidarisation d'un élément à la flûte sismique 4 est réalisée par exemple par un serrage autour d'un des connecteurs 90 rigides. Les connecteurs 90 sont par exemple réalisés en métal. Un connecteur 90 comprend deux demi-connecteurs 90a et 90b joints entre eux pour réaliser d'une part une liaison mécanique et d'autre part une connexion électrique assurant la transmission des signaux de communication et la transmission de l'énergie d'alimentation, d'une section à l'autre. Les données de mesure sont transmises via le noyau central 92 et par les connecteurs 90 entre deux sections de flûte sismique.

Chaque demi-connecteur comprend sur sa paroi extérieure des moyens 107 d'accrochage. Ces moyens 107 d'accrochage se présentent par exemple sous la forme de rainure, d'encoches ou de dents destinées à coopérer avec la paroi intérieure d'un élément fixé autour d'un des demi-connecteurs ou fixé autour des deux demi-connecteurs 90a et 90b.

La gaine 91 extérieure est souple et les capteurs présentent une sensibilité mécanique importante les rendant vulnérables à l'écrasement.

La figure 4 représente un flotteur 38 positionné en tête de la flûte sismique. Ce type de flotteur peut être disposé aux deux extrémités d'une flûte sismique comprenant un corps dans lequel les systèmes de localisation géographique et de communication avec le navire laboratoire sont aménagés.

La position de chaque flotteur 38 est ainsi communiquée au navire laboratoire. Le flotteur 38 comprend notamment une antenne 94 radio aérienne de localisation géographique ou de communication avec le navire laboratoire 35. Le flotteur 38 peut comprendre par ailleurs une antenne 95 hydroacoustique de localisation. L'amarre 96 traînant le flotteur 38 se présente par exemple sous la forme d'une chaîne.

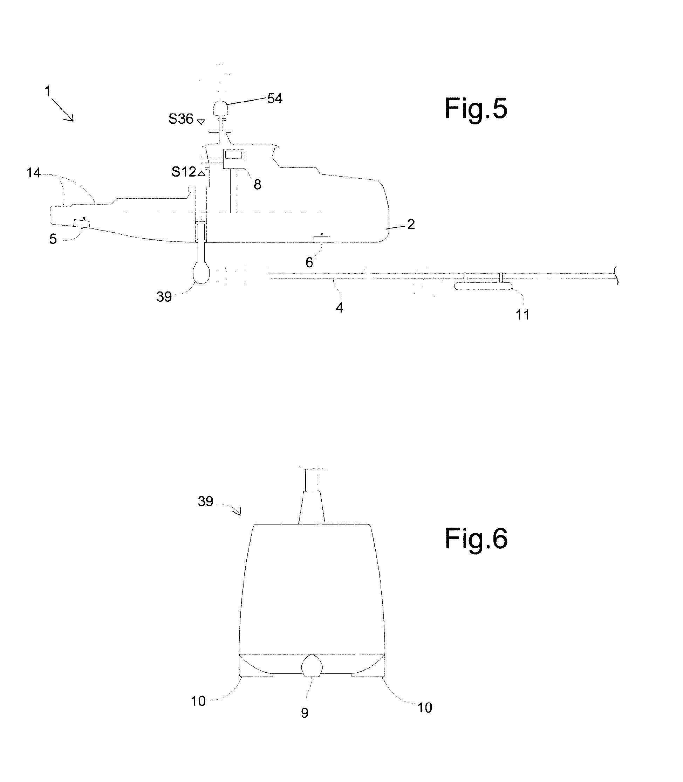

La figure 5 représente schématiquement une vue de côté d'un dispositif de maintenance 1. Le dispositif de maintenance 1 comprenant un corps 2 flottant sur l'eau. Le corps 2 flottant est par exemple réalisé sous la forme d'une coque de navire. Un tel navire peut être monocoque ou multicoque.

Une plateforme d'intervention 14 est prévue à l'arrière du dispositif de maintenance 1. La plateforme 14 d'intervention peut s'étendre sur toute la largeur du navire de maintenance et le long de sa poupe.

Le dispositif de maintenance 1 navigue par ailleurs sur l'eau grâce à un système propulseur relié au corps. Le système propulseur utilise par exemple de l'énergie électrique ou un carburant ou ces deux sources d'énergie.

Le système propulseur représenté à la figure 5 comprend notamment deux hydrojets 5 et 6. Le système propulseur est piloté par un module de commande 8 qui commande la direction du dispositif de maintenance 1 ainsi que sa vitesse.

Le module de commande 8 reçoit par exemple un signal S36 fourni par un système 54 radio émetteur et récepteur. Le système radio 54 peut ainsi recevoir du navire laboratoire 35 les données représentatives de la configuration générale dans laquelle se trouvent le navire laboratoire 35, le réseau tracté de flûtes sismiques 4 et le dispositif de maintenance 1 tels que représentés à la figure 1. Le dispositif de maintenance 1 peut ainsi être dirigé entre deux flûtes sismiques 4.

Les hydrojets 5 et 6 utilisés sont avantageusement non coupants pour une flûte sismique 4. Ainsi le moyen de propulsion du dispositif de maintenance 1 ne risque pas d'endommager une flûte sismique 4 lorsqu'il évolue sur le périmètre du réseau tracté de flûtes sismiques.

La localisation de la flûte sismique peut être réalisée grâce au système de localisation hydroacoustique ou de visu par le pilote du dispositif de maintenance.

Le dispositif de maintenance 1 comprend en outre son propre système de localisation hydroacoustique ou hydrooptique fixé au corps 2. Un système émetteur-récepteur 39 hydroacoustique est représenté seul à la figure 6 et comprend un émetteur hydroacoustique 9 ainsi que des antennes 10 hydroacoustiques de réception.

Le système 39 émetteur-récepteur de localisation peut être relevé ou descendu dans un puits aménagé dans la coque 2 pour être remonté dans la coque 2 ou respectivement être descendu sous la coque 2.

Le système de localisation 39 émetteur-récepteur communique avec une balise 11 fixée à la flûte sismique 4, comme représenté à la figure 5. Cette balise 11 est fixée au préalable à une flûte sismique 4, par exemple sur la flûte sismique devant faire l'objet d'opérations de maintenance.

Pour la fixation de cette balise 11, le dispositif de maintenance 1 s'engage entre les flûtes sismiques et se rapproche de l'une d'elles pour fixer la balise 11 hydroacoustique. La fixation de la balise peut être réalisée par exemple grâce à une ou plusieurs bagues de serrage. Ces bagues de serrage sont par exemple disposées autour de l'enveloppe extérieure 91, un support souple étant intercalé entre la bague et l'enveloppe extérieure.

La balise comprend par exemple un système de positionnement hydroacoustique, un système de positionnement par satellite ainsi qu'un système de communication avec le dispositif de maintenance 1.

Après la fixation de la balise 11, la communication avec le système de localisation 39 permet de fournir un signal S12 supplémentaire de localisation de précision accrue, au module 8 de commande. Le signal S12 transmis par le système 39 de localisation est représentatif de la position relative de balise hydroacoustique 11 par rapport au dispositif de maintenance 1 dans un repère en trois dimensions. Cette position relative est déterminée par un ensemble de données transmises représentatives de l'écart en longitude, de l'écart en latitude et de la profondeur de la balise 11.

Le signal S12 transmis par le système 39 de localisation est également représentatif de la vitesse relative du dispositif de maintenance 1 par rapport à la balise hydroacoustique 11, dans un repère en trois dimensions.

Cette balise 11 hydroacoustique permet d'améliorer le positionnement du dispositif de maintenance 1 par rapport au réseau de flûtes sismiques et plus particulièrement par rapport à la flûte sismique 4 sur laquelle des opérations de maintenance doivent être effectuées.

Ainsi le module de commande 8 peut piloter la vitesse du dispositif de maintenance 1 par rapport à la flûte sismique 4 et se placer de façon précise à distance de celle-ci.

Le module de commande 8 peut par exemple régler une vitesse sensiblement constante du dispositif de maintenance 1 par rapport à la flûte sismique 4 ou une vitesse nulle du dispositif de maintenance 1 par rapport à la flûte sismique 4.

La vitesse du dispositif de maintenance 1 peut être réglée par le module de commande 8 automatiquement ou semi-automatiquement par rapport à celle de la flûte sismique 4 en fonction du signal S12 fourni par le système de localisation 39.

L'écart latéral entre le dispositif de maintenance 1 et la flûte sismique 4 peut être réglé par le module de commande 8 automatiquement ou semi-automatiquement en fonction du signal S12 fourni par le système de localisation hydroacoustique.

L'écart entre le dispositif de maintenance 1 et la balise 11 peut également être réglé par le module de commande 8 automatiquement ou semi-automatiquement en fonction du signal S12 fourni par le système de localisation hydroacoustique.

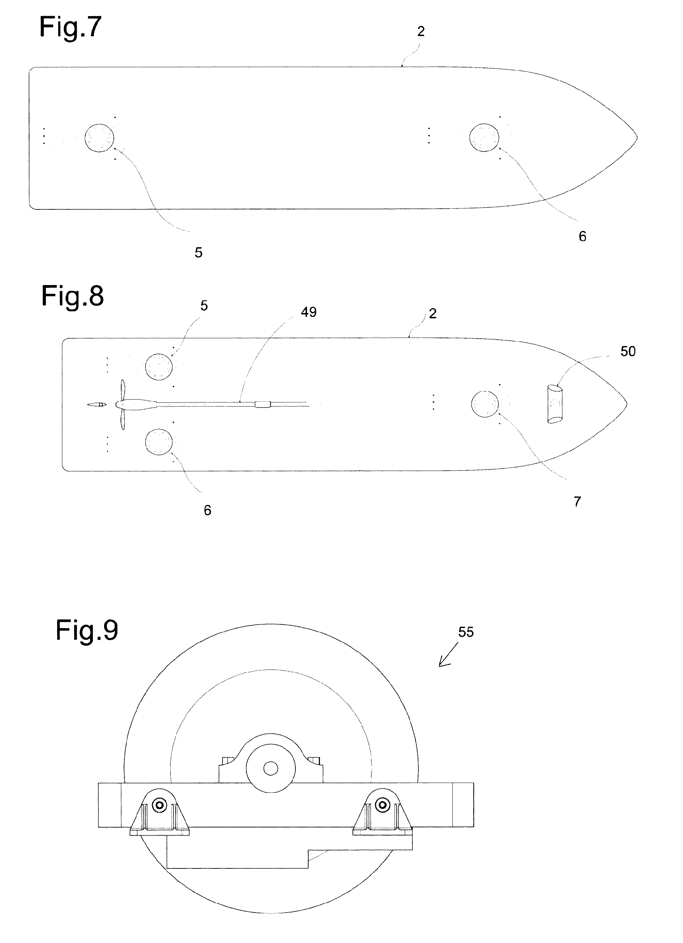

Comme représenté à la figure 7, le système propulseur disposé sous la coque 2 peut comprendre deux hydrojets azimutaux 5 et 6. Un hydrojet azimutal permet de régler la force de propulsion mais aussi la direction de propulsion par rapport à la coque 2. Un hydrojet azimutal se présente par exemple sous la forme d'un propulseur comprenant une pompe générant un jet d'eau de propulsion orientable.

Un hydrojet 5 est disposé est à la poupe de la coque 2 tandis qu'un autre hydrojet 6 est disposé à la proue de la coque 2. Le réglage d'une distance latérale par rapport à la flûte sismique est ainsi facilité.

La figure 8 représente un autre système propulseur comprenant trois hydrojets azimutaux. Le réglage d'une distance latérale par rapport à la flûte sismique est également facilité.

Le système de propulsion comprend une pluralité d'hydrojets 5, 6 et 7 dimensionnés de telle sorte qu'en cas de panne d'un hydrojet au cours d'une opération effectuée à vitesse nominale de la flûte sismique dans l'eau, la manoeuvrabilité du dispositif de maintenance 1 puisse être conservée en toute sécurité.

Le système propulseur de la figure 8 comprend également un système à hélice 49 pouvant être bloqué à l'arrêt lors des manoeuvres à proximité des flûtes sismiques 4, les flûtes sismiques ne risquant pas alors d'être endommagées par le système propulseur. Le système propulseur comprend également un système 50 de décalage à l'arrêt de la proue de la coque 2.

Le système à hélice 49 associé à un gouvernail permet de se déplacer hors du réseau de flûtes sismiques. La propulsion au moyen de l'hélice permet en effet d'atteindre une vitesse plus élevée pour une consommation d'énergie moindre.

On peut également utiliser un système propulseur comprenant un unique hydrojet azimutal.

On peut également utiliser un système propulseur comprenant un ou plusieurs hydrojets non azimutaux.

Le dispositif de maintenance 1 peut avantageusement et avec sécurité être utilisé par des conditions de mer et de vent relativement fortes, par exemple par un vent de force 2 à 3 Beaufort voire jusqu'à un vent de force 4 Beaufort ou même de force 5 Beaufort.

De plus comme représenté à la figure 9, pour stabiliser encore davantage le dispositif de maintenance lorsque la mer est agitée, on peut installer un système actif de stabilisation 55 dans le dispositif de maintenance.

Ce système actif de stabilisation antiroulis 55 est par exemple de type gyroscopique et permet notamment de réduire efficacement les mouvements de roulis du dispositif de maintenance 1. D'autres systèmes stabilisateurs peuvent éventuellement être utilisés pour une stabilisation en roulis. Le système actif de stabilisation antiroulis peut être piloté par le module de commande 8 du dispositif de maintenance 1.

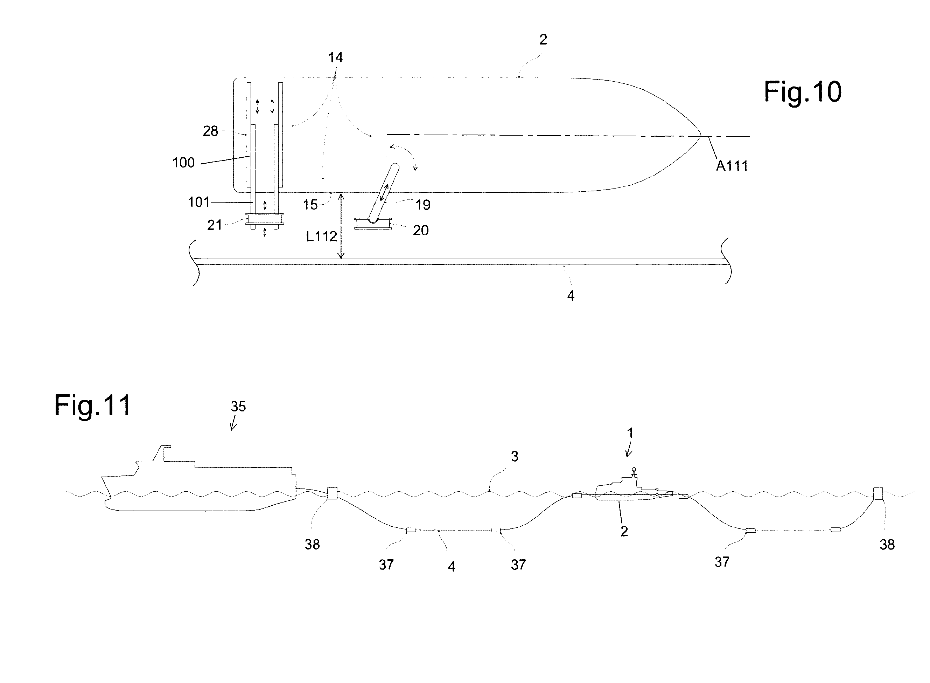

Comme représenté à la figure 10, le dispositif de maintenance est piloté pour que l'un de ses bords latéraux externes 15 le long duquel s'étend une plateforme d'intervention 14, vienne à distance d'intervention L112 de la flûte sismique 4. L'axe longitudinal A111, du corps 2 est sensiblement parallèle à la portion de flûte sismique 4 à proximité du dispositif de maintenance.

La plateforme d'intervention 14 peut accueillir un ou plusieurs opérateurs, un ou plusieurs outils 21 de maintenance ou un ou plusieurs bras de levage 19 chacun équipé d'un préhenseur 20.

L'outil de maintenance 21, comme représenté à la figure 10, est disposé au-dessus de l'eau et décalé latéralement par rapport au bord externe 15. L'outil de maintenance 21 est monté mobile en translation par rapport à la coque 2.

L'outil de maintenance 21 est monté mobile en translation sur deux rails faisant partis d'un chariot 101, le chariot 101 étant lui-même mobile en translation par rapport à deux rails 100 solidaires de la coque 2. L'outil de maintenance est ainsi monté sur un support 28 permettant une double translation. Cette double translation permet d'une part un encombrement réduit et d'autre part un choix étendu de positionnements de l'outil de maintenance.

Le support 28 permet deux translations orientées selon une direction perpendiculaire à l'axe longitudinal A111 de la coque 2. Le support 28 à double mouvement de translation permet ainsi un décalage au-dessus de l'eau d'un côté ou de l'autre de la coque ou une disposition au-dessus de la coque 2.

Comme représenté à la figure 10, l'outil 21 de maintenance peut être positionné dans une position d'intervention avec son réceptacle disposé au-dessus de l'eau. Une fois la flûte sismique positionnée dans le réceptacle de l'outil de maintenance 21, ce dernier peut être maintenu dans sa position au-dessus de l'eau, décalé davantage au-dessus de l'eau, rapproché de la plateforme de travail 14 ou amené au-dessus de la plateforme de travail 14.

L'outil de maintenance 21 peut comprendre un ou plusieurs équipements afin de réaliser une ou plusieurs fonctions. L'outil de maintenance peut par exemple être utilisé pour un nettoyage par brossage, un nettoyage ou un entretien par pulvérisation de fluide, un guidage, un remorquage ou un simple maintien en position.

Le bras de levage 19 permet un ou plusieurs mouvements en translation ou en rotation tel qu'un bras multiaxe télescopique.

Un préhenseur 20 est disposé à l'extrémité du bras de levage 19. Le préhenseur 20 qui sera détaillé par la suite permet la saisie de la flûte sismique 4 pour sa manipulation. La flûte sismique est saisie notamment au niveau de sa gaine extérieure dans une portion entre deux connecteurs. Le préhenseur 20 et le bras 19 de levage permettent ainsi de saisir la flûte sismique sous l'eau, d'amener la flûte sismique à proximité de la plateforme de travail ou au-dessus de l'outil de maintenance ou encore simplement de maintenir la flûte sismique proche du dispositif de maintenance.

Le bras de levage 19, grâce aux mouvements de rotation ou de translation, peut disposer le préhenseur 20 au-dessus de l'eau ou à une profondeur déterminée sous l'eau ou encore à proximité de l'outil de maintenance 21 ou au-dessus de celui-ci. Les opérations de maintenance effectuées, sur une flûte sismique seront détaillées par la suite.

La plateforme d'intervention 14 s'étendant à l'arrière du corps 2, elle facilite également un remorquage de la flûte sismique 4 maintenue par l'outil 21 dans sa position au-dessus de la plateforme d'intervention 14. Les opérations de remorquage seront détaillées par la suite.

La figure 11 représente schématiquement, en vue de côté, une flûte sismique 4 tractée par le navire laboratoire 35 et saisie par le dispositif de maintenance 1. On voit ici un navire de maintenance 1 naviguant sur la mer, mais on peut aussi envisager un dispositif de maintenance 1 flottant sur une masse d'eau 3 de nature différente.

Le dispositif de maintenance 1 relié à la flûte sismique 4 peut rester à une distance latérale sensiblement constante de la flûte sismique 4. La vitesse du dispositif de maintenance 1 par rapport à celle de la flûte sismique 4 peut être réglée nulle mais on peut aussi prévoir un dispositif de maintenance 1 avançant ou reculant par rapport à la flûte sismique. La flûte sismique 4 peut ainsi avancer ou reculer par rapport au dispositif de maintenance 1 à une vitesse déterminée.

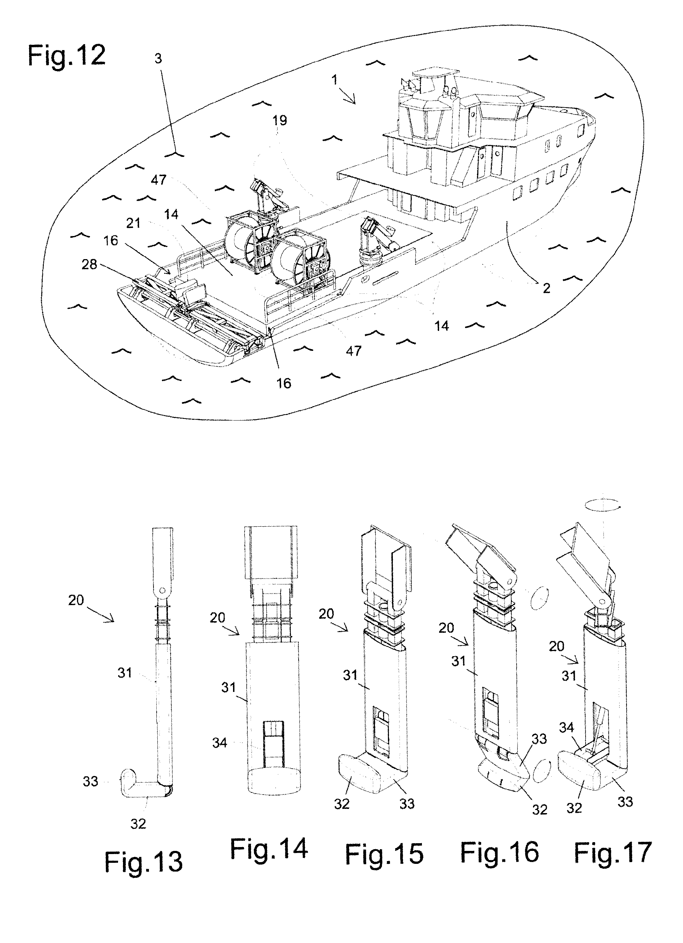

La figure 12 représente une vue en perspective arrière d'un dispositif de maintenance 1. Le dispositif de maintenance 1 se présente sous la forme d'un navire de maintenance. Le navire est par exemple de longueur comprise entre 30m et 60m et par exemple d'environ 40m. Le navire de maintenance a par exemple un tirant d'eau compris entre 2,5m et 4,5m et par exemple de 3m environ.

Le dispositif de maintenance 1 comprend une plateforme 14 disposée à l'arrière de la coque 2 c'est à dire le long de la poupe et s'étendant par ailleurs d'un bord à l'autre de la coque 2. Un outil de maintenance 21 est fixé sur un support 28 à double translation s'étendant le long de la proue. Le support 28.de l'outil de maintenance s'étend par exemple sur toute la largeur de la plateforme d'intervention 14. Dans le cas d'un navire de maintenance monocoque, le support 28 s'étend par exemple du bord bâbord au bord tribord. Grâce notamment à la double translation, l'outil de maintenance peut être amené à bâbord ou à tribord du dispositif de maintenance 1.

Un ou plusieurs treuils 47 sont disposés côte à côte sur la plateforme d'intervention 14, en vis-à-vis du support 28 à double translation, leur axe étant perpendiculaire à l'axe longitudinal de la coque 2. Les deux treuils 47 sont disposés en avant du support 28 de l'outil de maintenance. Chaque treuil 47 a par exemple une capacité de traction comprise entre 3 tonnes et 10 tonnes, par exemple 5 tonnes. Ainsi l'outil 21 de maintenance peut être positionné en face de l'un ou l'autre des treuils 47, pour permettre le changement ou le stockage d'une ou plusieurs sections de flûte sismique.

Sur la figure 12, on voit également deux bras de levage 19 portant chacun un préhenseur à leur extrémité. Les bras de levage 19 sont disposés en avant du support 28 de l'outil de maintenance 21. Un bras de levage 19 est disposé à bâbord tandis que l'autre bras de levage 19 est disposé à tribord afin d'intervenir sur les deux bords latéraux de la plateforme d'intervention 14.

Le bras de levage 19 est disposé sur la plateforme d'intervention 14 à une distance déterminée du bord externe et à une distance déterminée du support 28 de l'outil de maintenance 21. Chaque bras de levage 19 est par exemple disposé à environ 1m du bord latéral du dispositif de maintenance et à une distance comprise entre 5m et 8m du support 28 de l'outil 21 de maintenance.

Chaque bras de levage 19 présente par exemple une masse comprise entre 2000kg et 5000kg et par exemple d'environ 3500kg. Les préhenseurs sont par exemple réalisés en acier, en aluminium ou en matériau composite et présentent chacun une masse comprise entre 200kg et 500kg, par exemple d'environ 300kg.

Chaque bras de levage peut par exemple développer un couple de rotation autour d'un axe vertical d'environ 40000N/m et un couple de charge d'environ 40t/m. Les bras de levage 19, étendus au maximum, sont par exemple dimensionnés pour pouvoir soulever une masse d'environ 4000kg.

L'outil de maintenance 21 peut notamment être décalé par rapport à un bord latéral de la plateforme d'intervention 14 afin d'être positionné au-dessus de l'eau sur le côté bâbord ou tribord de la coque 2, afin de coopérer avec l'un ou l'autre des préhenseurs.

Deux espaces de travail 16 pour un ou plusieurs opérateurs sont disposés le long de chacun des bords latéraux de la plateforme 14 d'intervention. Ces espaces de travail 16 sont chacun disposé entre un bras de levage 19 et le support 28 de l'outil de maintenance. Une zone centrale de travail en arrière des treuils 47 est aménagée entre ces deux espaces de travail latéraux 16.

Les figures 13 à 17 représentent différentes positions du préhenseur installé à l'extrémité du bras de levage 19. Le préhenseur 20 comprend une jambe 31 s'étendant sur une longueur déterminée notamment de manière à pouvoir saisir la flûte sismique sous l'eau, si nécessaire. La jambe présente par exemple une longueur comprise entre 50cm et 2m. La longueur de la jambe 31 est choisie en fonction du type de flûte sismique à saisir. La jambe 31 est positionnée et orientée par le bras de levage 19 multiaxes. Cette jambe 19 peut notamment être inclinée autour d'un axe horizontal comme représenté à la figure 16 ou pivotée autour d'un axe vertical comme représenté à la figure 17.

La jambe 31 est reliée par ailleurs à une portion en L pour former un réceptacle. La portion en L est constituée d'une portion 32 destinée à supporter la flûte 4 sismique et d'une portion 33 destinée à retenir latéralement la flûte sismique 4. La flûte sismique 4 est par ailleurs maintenue latéralement à l'opposé de la portion 33, par l'extrémité inférieure de la jambe 31.

Comme représenté à la figure 16, par sécurité, en cas d'effort trop important exercé par la flûte sismique 4 sur le préhenseur 20, la portion en L est escamotée en pivotant par rapport à la jambe 31. Un actionneur est aménagé dans la jambe 31 pour ramener la portion en L avec sa partie de support 32 perpendiculairement à la jambe 31. Cet actionneur peut être commandé automatiquement pour un escamotage de la portion en L.

Le préhenseur 20 peut également comprendre un doigt 34 de maintien mobile entre une position escamotée dans la jambe 31 et une position rabattue par-dessus la portion en L. Un actionneur est également aménagé dans la jambe pour abaisser le doigt 34 ou le remonter en position rentrée dans la jambe 31. Le doigt 34 peut exercer une force déterminée permettant de maintenir la flûte sismique sans pour autant empêcher un glissement de celle-ci dans le réceptacle du préhenseur 20.

Le doigt 34 et le réceptacle du préhenseur 20 comprennent par exemple des surfaces de contact non rugueuses destinées à venir contre la flûte sismique.

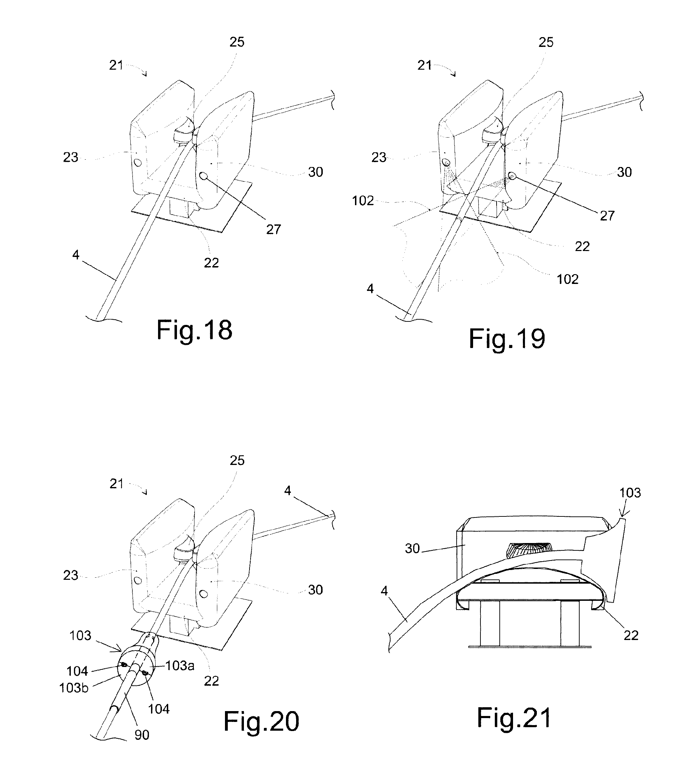

Les figures 18 et 19 montrent l'outil de maintien réalisant un nettoyage d'une flûte sismique 4. L'outil de maintien 21 comprend un réceptacle constitué d'une portion de support 22 destinée à supporter la flûte sismique 4 et des portions 23 et 30 de guidage latéral de la flûte sismique 4. La portion de support 22 est destinée à être disposée sensiblement horizontale. Le réceptacle présente ainsi un profil en U.

Une des portions 23 ou 30 de guidage latéral est prévue pour être escamotée vers l'extérieur en cas de force trop importante appliquée par l'outil de maintenance sur la flûte sismique. Cette force limite maximum est calculée en fonction de la résistance de l'ensemble des éléments constitutifs du dispositif de maintenance et en fonction de la résistance de la flûte sismique 4. Ainsi la portion externe de guidage peut être escamotée automatiquement par sécurité. On peut aussi prévoir un escamotage commandé par un actionneur.

Le réceptacle de l'outil de maintenance peut être équipé d'un ou plusieurs systèmes mécaniques réalisant chacun une fonction. Comme représenté à la figure 18, un système de nettoyage comprend des brosses 25. Les brosses 25 se présentent sous la forme de rouleaux disposés de part et d'autre de la flûte sismique. Les brosses 25 peuvent être rotatives ou fixes par rapport au réceptacle.

Une brosse est par exemple aménagée dans une portion de guidage latéral 23 ou 30 ou dans la portion 22 de support ou sur un bord d'une de ces portions 22, 23 ou 30.

Une brosse unique ou une pluralité de brosses peut être reliée au réceptacle de l'outil de maintenance.

Chaque brosse 25 agit ainsi tout le long de flûte sismique tandis que cette dernière coulisse dans le réceptacle de l'outil de maintenance. Le coulissement de la flûte sismique dans l'outil de maintenance est dû au déplacement du dispositif de maintenance par rapport à la flûte sismique. Le dispositif de maintenance peut avancer ou reculer par rapport à la flûte sismique pour faire coulisser la flûte sismique dans un sens ou dans l'autre. Des brosses 25 tournantes par rapport au réceptacle permettent d'accroître l'effet du brossage.

L'outil de maintenance peut comprendre également un système 27 d'aspersion de la flûte sismique 4 par des jets 102, comme représenté à la figure 19. Le système d'aspersion comprend des buses 27 fixées au réceptacle et orientées vers l'intérieur du réceptacle pour pulvériser un jet de fluide nettoyant sur la flûte sismique 4. Comme représenté aux figures 18 et 19, les buses du système d'aspersion peuvent être disposées de part et d'autre de la flûte sismique, dans les portions de guidage latéral et au-dessus du passage pour la flûte sismique.

Un jet nettoyant 102 se présente par exemple sous la forme d'un jet de liquide sous pression tel que de l'eau. L'eau est par exemple amenée à une pression de plusieurs bars ou plusieurs dizaines de bars. Les systèmes de pompage et de stockage du fluide de nettoyage sont des systèmes classiques et ne sont pas représentés. Leur commande peut être réalisée par le module de commande 8 ou par les opérateurs sur la plateforme d'intervention.

Les buses peuvent également pulvériser un enduit de composition spécifique pour une protection de la flûte sismique contre l'encrassement. La flûte sismique coulissant dans le réceptacle est ainsi enduite sur toute sa périphérie extérieure et tout le long de la flûte sismique.

L'outil de maintenance peut réaliser un nettoyage par des brosses ou par un système d'aspersion ou par une combinaison des brosses et du système d'aspersion.

L'outil de maintenance peut également être utilisé pour un remorquage, comme illustré par les figures 20 et 21. La figure 20 montre une flûte sismique 4 équipée d'une butée 103 disposée en avant de l'outil de maintenance 21. Cette butée 103 comprend deux demi-butées 103a et 103b assemblées entre elles et fixés autour d'un demi-connecteur. Le connecteur peut ainsi être démonté sans désolidariser cette butée 103. La butée est ainsi solidaire d'une des sections de flûte sismique jointes entre elles par le connecteur 90.

Les demi-butées 103a et 103b comprennent des moyens d'attache tels que des languettes 104 vissées l'une avec l'autre pour fixer les demi-butées entre elles. D'autres moyens de fixation des demi-butées peuvent être envisagés. Le logement intérieur de la butée 103 serré autour d'un demi-connecteur peut comprendre une surface rugueuse, des dents ou des nervures de solidarisation.

La butée 103 présente un profil extérieur évasé et incurvé prévu pour se bloquer dans le réceptacle de l'outil de maintenance. Ainsi la flûte sismique peut reculer dans le réceptacle de l'outil de maintenance jusqu'à ce que la butée vienne en appui contre le réceptacle.

La butée 103 a par exemple des parois latérales concaves arrondies coopérant avec les parois convexes arrondies du réceptacle.

Lorsque la butée est en appui contre le réceptacle, la flûte sismique est tractée par l'outil de maintenance. La flûte sismique garde alors la possibilité d'être tractée vers l'avant, du fait de la forme de la butée. Par ailleurs le connecteur 90 peut être démonté par un opérateur.

La figure 21 représente une butée 103 tractée par l'outil de maintenance, une portion arrière de la flûte sismique 4 étant elle-même solidaire de la butée 103. Il est alors possible de fixer une nouvelle section de flûte sismique provenant d'un treuil.

Après fixation d'une nouvelle section de flûte sismique, la butée peut être avancée par rapport à l'outil de maintenance en actionnant le treuil. La flûte sismique est alors remorquée par le treuil et la butée peut être démontée. Avantageusement le treuil peut être enroulé pour le stockage d'une section de flûte sismique ou le treuil peut être déroulé pour la fourniture d'une section neuve de flûte sismique.

Une fois l'opération de stockage ou de fourniture de la section de flûte sismique, la butée 103 peut être à nouveau solidarisée sur un connecteur avant d'être à nouveau bloquée dans l'outil de maintenance. Le connecteur peut alors être démonté pour détacher la section reliée au treuil.

La section restante en amont traquée par le navire laboratoire peut alors être saisie pour être rattachée à la section tractée par l'outil de maintenance.

Le profil extérieur de la butée 103 permet avantageusement de ne pas bloquer la flûte sismique lorsque la butée est fixée sur la flûte sismique tandis que celle-ci est tractée par le navire laboratoire et passe dans le réceptacle de l'outil de maintenance. En effet en cas de ralentissement du dispositif de maintenance, la flûte sismique est libre d'avancer dans le réceptacle de l'outil de maintenance et en cas d'accélération du dispositif de maintenance, la portion de la flûte sismique en amont de la butée est tractée par le navire laboratoire tandis que la portion en aval de la butée est tractée par l'outil de maintenance.

Les parois 22, 23 et 30 du réceptacle sont incurvées vers l'intérieur du réceptacle créant ainsi un rétrécissement dans le passage du réceptacle. La section du passage est rétrécie latéralement et en hauteur. La butée de profil extérieur en V incurvé peut ainsi se caler dans le passage à l'avant du réceptacle 21. La butée 103 comprend une partie avant dont le diamètre correspond au diamètre maximum de la butée. Cette partie avant de la butée est destinée à rester en dehors du passage aménagé dans le réceptacle de l'outil de maintenance, comme représenté à la figure 21.

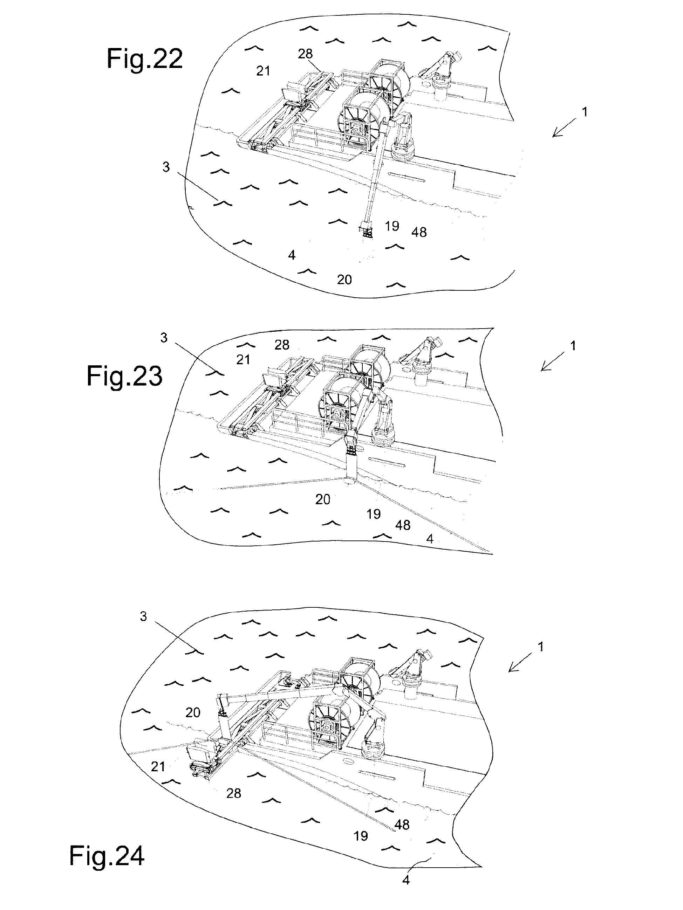

Différentes opérations pour la maintenance vont maintenant être décrites en relation avec les figures 22 à 27.

Avant d'effectuer des opérations d'entretien sur une flûte sismique, celle-ci est d'abord saisie par le dispositif de maintenance 1. La figure 22 représente le dispositif de maintenance 1 lors de la saisie d'une flûte sismique. La flûte sismique 4 peut s'entendre sous l'eau à faible profondeur, ou à la surface de l'eau. La flûte sismique est par exemple située sous l'eau à une profondeur de 1m.

Le préhenseur 20 est plongé à la verticale dans l'eau puis sa jambe est amenée contre la flûte sismique 4 avant de remonter le préhenseur 20 pour que la ligne soit maintenue dans le réceptacle du préhenseur, sur sa portion de support. Le bras de levage 19 du préhenseur 20 est piloté automatiquement, semi automatiquement voire manuellement. Le bras de levage 19 s'étend par exemple sur une distance permettant d'accéder à une flûte sismique située à 3m du dispositif de maintenance 1 et à 1m sous l'eau. Le bras de levage 19 est disposé sur la coque 2 de façon à pouvoir plonger le préhenseur 20 sous l'eau à la verticale et à distance de la coque. Le bras de levage 19 est installé au bord de la plateforme d'intervention 14 comme décrit précédemment.

Pour la préhension de la flûte sismique le dispositif de maintenance 1 est positionné à une distance inférieure ou égale à une distance d'approche pour pouvoir effectuer cette préhension.

La flûte sismique 4 peut alors être soulevée par le bras de levage et par le préhenseur, comme représenté à la figure 23. Le bras de levage 19 est bien-entendu dimensionné pour pouvoir soulever la flûte sismique 4. Par ailleurs le bras de levage est suffisamment étendu pour soulever la flûte sismique à une hauteur comprise entre 0m et 5m au-dessus de l'eau et par exemple de 4m environ.

Il est alors possible d'intervenir sur la flûte sismique 4 en pilotant le bras de levage 19 pour amener le préhenseur 20 à proximité de la plateforme d'intervention. De préférence la flûte sismique 4 est disposée dans le réceptacle de l'outil de maintenance 21 pour une intervention sur la flûte sismique. L'outil de maintenance et le préhenseur peuvent être utilisés successivement ou simultanément.

Le réceptacle et le préhenseur sont mobiles l'un par rapport à l'autre au moins selon une direction transversale au dispositif de maintenance. Cette direction transversale est ici sensiblement perpendiculaire à l'axe longitudinal du corps flottant du dispositif de maintenance. L'axe longitudinal du corps flottant est sensiblement orienté selon la même direction que la flûte sismique qui s'étend le long du corps flottant.

Comme représenté à la figure 23, le réceptacle de l'outil de maintenance 21 est monté mobile par rapport à la plateforme d'intervention 14. Le support 28 de l'outil de maintenance s'étend transversalement par rapport à l'axe longitudinal de la coque et permet une double translation, comme décrit précédemment.

Ainsi l'outil de maintenance peut être disposé au milieu de la plateforme de maintenance comme représenté à la figure 23 ou dans une position décalée au-dessus de l'eau comme représenté à la figure 24. D'autres positions au-dessus de la plateforme d'intervention 14 peuvent bien-entendu être réglées. Par ailleurs le décalage ou l'alignement entre le réceptacle de l'outil de maintenance et le réceptacle du préhenseur peuvent également être réglés.

Après avoir positionné le préhenseur 20 au-dessus de l'outil de maintenance 21 et légèrement en avant de son support, l'outil de maintenance 21 peut être décalé transversalement en alignement avec la flûte sismique 4 maintenue dans le préhenseur 20, comme représenté à la figure 24. Les réceptacles du préhenseur 20 et l'outil de maintenance 21 sont alors décalés par rapport à un bord latéral externe de la coque et sont disposés dans un même plan longitudinal.

Le support 28 de l'outil de maintenance est dimensionné pour décaler l'outil par rapport au bord externe à une distance comprise entre 0m et 3m et par exemple d'environ 2m. Le support 28 est par ailleurs dimensionné pour que l'outil de maintenance 21 fixé sur le support 28 soit disposé au-dessus du niveau de l'eau à une hauteur comprise entre 1m et 3m et par exemple d'environ 1,5m.

Comme représenté à la figure 24, le préhenseur peut être disposé à un niveau supérieur à celui du réceptacle de l'outil de maintenance 21 et la flûte sismique 4 peut être ensuite déposée dans le réceptacle de l'outil de maintenance 21 par un abaissement du préhenseur 20.

Le bras de levage 19 du préhenseur s'étend par exemple radialement sur une distance comprise entre 6m et 10m et par exemple d'environ 8m pour pouvoir venir à proximité de l'outil de maintenance et à un niveau au-dessus de celui-ci. Ainsi le bras de levage 19 peut déposer la flûte sismique 4 dans le réceptacle de l'outil de maintenance 21 ou à l'inverse soulever la flûte sismique hors de l'outil 21.

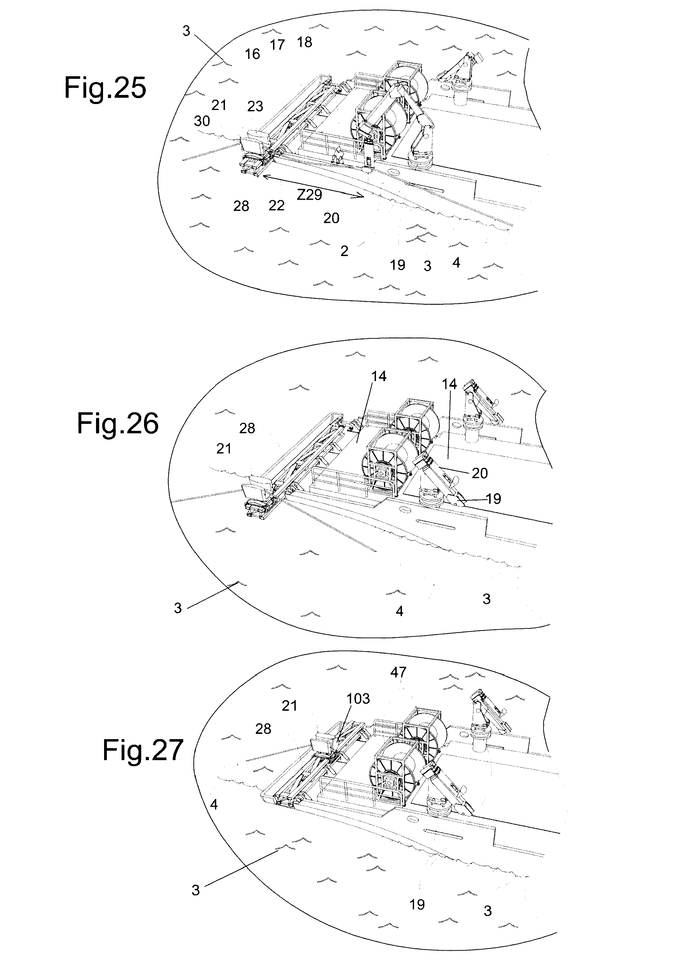

La figure 25 représente le dispositif de maintenance 1 comprenant son outil de maintenance 21 disposé dans une position déportée au-dessus de l'eau et recevant par ailleurs la flûte sismique 4.

La flûte sismique 4 est également maintenue par le préhenseur 20 qui est disposé à une distance déterminée en avant de l'outil de maintenance et dans son alignement. Le préhenseur 20 et l'outil de maintenance 21 sont donc à la même hauteur.

Ainsi la flûte sismique est disposée dans une zone d'intervention Z29 en vis-à-vis d'une zone de travail 16 de la plateforme d'intervention 14. La zone d'intervention Z29 est par exemple à 1m au maximum de la zone de travail 16. Cette zone de travail 16 peut accueillir un ou plusieurs opérateurs 18. Bien-entendu cette zone de travail est sécurisée par une rambarde le long du bord en vis-à-vis de la zone d'intervention Z29.

Une rambarde de sécurité 17 borde également une zone de travail centrale de la plateforme d'intervention.

On peut prévoir une légère pression de maintien de la flûte sismique dans le préhenseur au moyen du doigt de verrouillage décrit précédemment. Ce verrouillage assure le guidage de la flûte dans le préhenseur 20 sans exercer de force sur la flûte sismique 4 selon une direction longitudinale de la flûte. Le dispositif de maintenance peut avancer à la même vitesse que la flûte sismique qui est alors immobile par rapport à la zone de travail 16.

Dans le cas où le pilotage du dispositif de maintenance 1 ne respecterait pas les efforts maximums prévus exercés par l'outil de maintenance et par le préhenseur sur la flûte sismique, celle-ci peut être libérée par escamotage de la portion en L du préhenseur 20 et par escamotage de la portion 30 externe de guidage de l'outil de maintenance 21. L'escamotage peut être déclenché automatiquement ou par les opérateurs 28.

Les opérations de maintenance sont par exemple le nettoyage de la flûte sismique, la réparation ou le remplacement des unités de contrôle et de guidage 37 ou la réparation ou le remplacement d'autres éléments fixés à la flûte sismique. On peut également prévoir dans cette zone d'intervention Z29 des opérations pour le remplacement d'une section endommagée de flûte sismique.

Le dispositif de maintenance selon l'invention permet ainsi un gain de productivité et de sécurité et de plus il est possible d'intervenir dans une plus large plage de conditions météorologiques. Avantageusement le confort de travail et la sécurité des opérateurs sont optimisés et améliorés. De plus les opérateurs 28 peuvent facilement positionner un outillage nécessaire à la maintenance à proximité de la flûte sismique.

L'organe de commande du système propulseur peut par ailleurs permettre à l'officier naviguant de régler précisément la position du dispositif de maintenance 1 de façon à ce que le dispositif de maintenance 1 se déplace parallèlement et à la même vitesse que la flûte sismique 4. Le dispositif de maintenance est par exemple positionné automatiquement avec une précision de moins de 1m.

A la fin des opérations de maintenance, le doigt de verrouillage du préhenseur 20 est escamoté. Le bras de levage 19 peut alors soulever le préhenseur pour soulever la flûte sismique hors de l'outil de maintenance 21 avant de la replonger dans l'eau. Enfin le préhenseur 20 est dégagé latéralement de la flûte sismique 4 immergée.

La figure 26 représente le dispositif de maintenance 1 avec son outil de maintenance 21 recevant la flûte sismique 4 qui coulisse par rapport au réceptacle de l'outil de maintenance 21. Au préalable, la flûte sismique a été déposée dans l'outil 21 de maintenance par le préhenseur 20, puis ce dernier a été amené au-dessus de la plateforme 14, en position de rangement. Le bras de levage 19 est par exemple dans une position de rangement avec son préhenseur 20 au-dessus de la plateforme d'intervention 14.

On voit que l'outil de maintenance 21 est relié à la plateforme d'intervention par son support 28 à double translation. L'outil de maintenance 21 est ainsi entraîné par le dispositif de maintenance 1 qui navigue à côté de la flûte sismique 4. L'outil de maintenance 21 reste par ailleurs maintenu fixement par rapport au corps du dispositif de maintenance dans sa position d'entretien au-dessus de l'eau.

L'organe de commande du système propulseur peut par ailleurs permettre à l'officier naviguant de régler la position du dispositif de maintenance 1 de façon à ce que le dispositif de maintenance 1 se déplace parallèlement et une vitesse constante par rapport à la flûte sismique 4. L'écart de vitesse correspond à la vitesse à laquelle la flûte sismique 4 coulisse dans le réceptacle.

L'outil de maintenance peut donc être appliqué le long de la flûte sismique 4. La flûte sismique peut ainsi être nettoyée ou enduite par l'outil de maintenance 21.

Dans le cas où une unité de contrôle et guidage 37 ou un autre élément solidaire de la flûte sismique 4 se rapproche de l'outil de maintenance 21, la flûte sismique 4 peut être soulevée temporairement par le préhenseur 20, comme expliqué en relation avec la figure 24. Ainsi l'élément solidaire de la flûte sismique passe par-dessus l'outil de maintenance 21. La vitesse du dispositif de maintenance peut être réduite momentanément. La flûte sismique 4 est ensuite reposée dans le réceptacle de l'outil de maintenance 21 pour être traitée sur une nouvelle longueur entre deux éléments solidaires de la flûte sismique 4 tels que les unités de contrôle et de guidage 37.

A la fin de ces opérations de maintenance, le préhenseur peut soulever la flûte sismique hors de l'outil de maintenance 21 avant de la replonger dans l'eau. Enfin le préhenseur est dégagé latéralement de la flûte sismique immergée.

La figure 27 représente le dispositif de maintenance tractant une portion de flûte sismique.

Après la prise en charge de la flûte sismique dans le réceptacle de l'outil 21 de maintenance, la position du dispositif de maintenance 1 le long de la flûte est réglée de manière à amener un élément de jonction 90 de deux sections de la flûte sismique à hauteur de la zone 16 de travail des opérateurs, comme représenté à la figure 25. Ainsi les opérateurs peuvent disposer la mâchoire de serrage d'une butée telle que décrite aux figures 20 et 21, autour du connecteur 90 de jonction de la flûte sismique, en tête d'une section défectueuse.

Le dispositif de maintenance 1 peut alors s'avancer de quelques mètres le long de la flûte sismique 4 afin que cette butée vienne contre le réceptacle de l'outil de maintenance 21. C'est alors l'outil de maintenance qui remorque la partie aval de la flûte sismique 4 tandis la tension sur là partie amont se relâche.

La partie amont de la flûte sismique peut alors être séparée de la partie avale. Une bouée peut être attachée à la partie amont préalablement à son détachement afin de faciliter sa récupération. La partie amont libre, le long du dispositif de maintenance est remorquée par le navire laboratoire. La partie amont peut également être maintenue dans le préhenseur 20 au moyen de son doigt de verrouillage.

La partie avale de la flûte sismique qui s'étend derrière le dispositif de maintenance 1 est en revanche remorquée par le dispositif de maintenance 1. La section de flûte sismique en prise dans l'outil de maintenance 21 est ici une section défectueuse dont le remplacement est nécessaire.

Le support 28 est commandé pour amener l'outil de maintenance 21 dans une position au-dessus de la plateforme d'intervention 14 afin de faciliter les opérations de raccordement de la portion de flûte sismique avec l'un des treuils de stockage 47.

Un câble ou une flûte sismique précédemment enroulée sur lé treuil 47 sont alors utilisés pour raccorder la flûte sismique maintenue dans l'outil de maintenance 21.

Une fois raccordée au treuil 47, la section de flûte sismique avale défectueuse est enroulée sur le treuil de stockage 47. Le treuil 47 est tout d'abord enroulé légèrement pour faire avancer la butée 103 par rapport à l'outil de maintenance 21. La butée est alors désolidarisée du connecteur 90 et la section défectueuse peut être enroulée complètement autour du treuil 47.

Une butée 103 est alors à nouveau fixée sur un connecteur 90 de liaison avec la portion de flûte sismique en aval de la section défectueuse. Le treuil 47 de stockage de la section défectueuse est ensuite déroulé pour positionner la butée 103 contre l'outil de maintenance 21. C'est alors l'outil de maintenance 21 qui remorque la partie aval de la flûte sismique 4 tandis la tension sur la partie amont se relâche. Le connecteur peut alors être détaché de la section défectueuse.

Une section de flûte de remplacement a été préalablement stockée sur un deuxième treuil 47. Cette section de flûte sismique est alors raccordée à la portion de flûte sismique remorquée par l'outil de maintenance 21.

Le deuxième treuil est légèrement enroulé pour faire avancer la butée 103 de façon à pouvoir la désolidariser du connecteur, puis le deuxième treuil est déroulé.

Une fois la section de remplacement complètement déroulée en aval du dispositif de maintenance 1, la butée 103 est à nouveau serrée sur un connecteur.

Le deuxième treuil 47 de stockage de la section de remplacement est alors déroulé pour positionner la butée 103 contre l'outil de maintenance 21. C'est alors l'outil de maintenance 21 qui remorque la partie aval de la flûte sismique 4 tandis la tension sur la partie amont se relâche.

Le connecteur peut alors être détaché de la section reliée au deuxième treuil 47.

La portion de flûte amont remorquée par le navire laboratoire est ensuite rattachée à la portion de flûte nouvellement installée. A cette fin l'outil de maintenance 21 est à nouveau disposé le long du bord de la plate-forme de travail.

Après le raccordement avec la portion aval, la vitesse du dispositif de maintenance 1 est ralentie de manière à laisser la portion amont de la flûte sismique reprendre la tension sur la partie avale. La butée est alors désolidarisée de son connecteur.

A la fin de ces opérations de maintenance, le préhenseur peut soulever, la flûte sismique 4 hors de l'outil de maintenance 21 avant de la replonger dans l'eau. Enfin le préhenseur 20 est dégagé latéralement de la flûte sismique immergée.

Le support 28 disposé le long de la proue de la coque 2 permet de faciliter le remorquage de la flûte sismique derrière le dispositif de maintenance 1. En effet rien ne gêne le positionnement de la flûte sismique passant de la position décalée sur un bord vers la position centrale au-dessus de la plateforme d'intervention. De plus les mouvements de la flûte sismique remorquée par le dispositif de maintenance ne sont pas entravés.

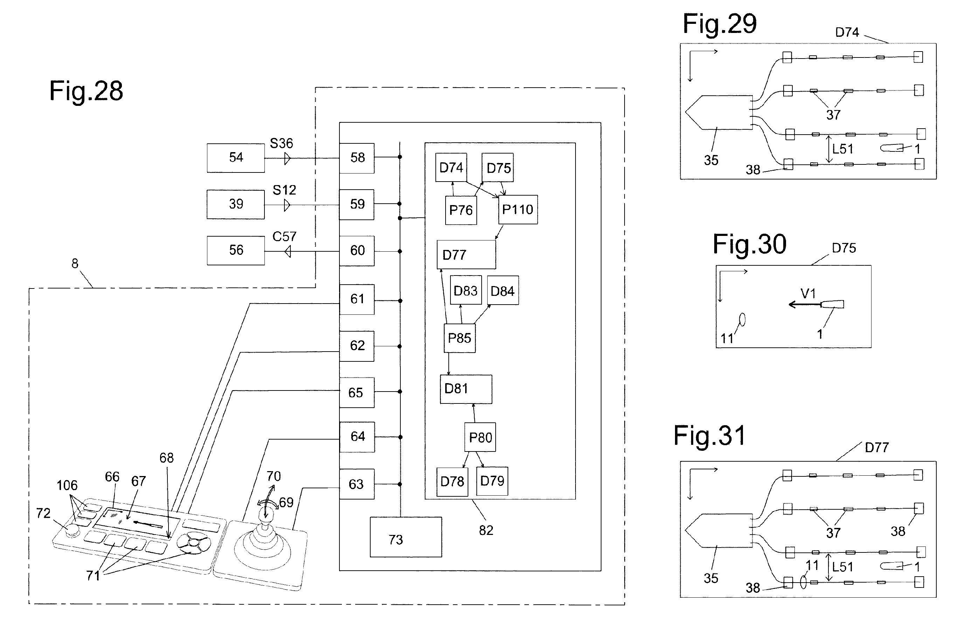

Un exemple de réalisation du module de commande 8 va maintenant être décrit. La figure 28 montre un exemple de module de commande 8 comprenant des interfaces de communications 58-65 reliées par un bus de communication avec un calculateur 73 et un composant mémoire 82. Le bus réalise notamment des fonctions de transfert de données mais aussi de contrôle de composant ou d'adressage des données. L'organe de commande comprend bien-entendu un organe d'alimentation et une horloge de synchronisation non représentés.

La figure 29 est une représentation graphique des données de localisation S36 transmises par le système 54 radio d'émission et de réception en liaison avec le navire laboratoire. Ce système radio 54 est relié à une interface de communication 58 du module de commande 8, les données reçues S36 étant gérées par un programme P76 de gestion des données de localisation pour être stockées dans un espace mémoire D74. Ces données D74 comprennent par exemple le positionnement dans un repère à au moins deux dimensions voire à trois dimensions du navire laboratoire 35, des flotteurs 38, des unités de contrôle et de guidage 37, du réseau de flûtes sismiques, ainsi que le positionnement du dispositif de maintenance 1.

La figure 30 est une représentation graphique des données de localisation S12 fournies par le système 39 de localisation du dispositif de maintenance, ce système 39 étant relié à une interface de communication 59 du module de commande 8. Ces données S12 sont gérées par un programme P76 de gestion des données de localisation et stockées dans un espace mémoire D75. Ces données D75 comprennent par exemple le positionnement dans un repère à au moins deux dimensions voire à trois dimensions du dispositif de maintenance 1 par rapport à la balise 11 attachée à une flûte sismique 4 ainsi que la vitesse V1 du dispositif de maintenance 1 relativement à cette balise 11.

Ces différentes données de localisation D74 et D75 sont par exemple traitées par un programme P110 de prétraitement des données de localisation qui les compilent par exemple pour superposer les deux repères de localisation. La superposition des données de localisation est mémorisée par ce programme P110 dans un espace mémoire D77 sous la forme de données de localisation compilées D77. Ces données de localisation compilées sont notamment représentées à la figure 31.

Les données de localisation D74, D75 ou D77 peuvent être transmises, via une interface de communication 65, à un écran d'affichage 66. Ainsi l'officier naviguant peut visionner les données de localisation reçues par liaison radio et provenant du navire laboratoire ou les données de localisation générées par son propre système de localisation 39 hydroacoustique ou des données de localisation compilées. Les données de localisation du dispositif de maintenance sont visualisées sous la forme d'une image 67 à l'écran 66. Le choix de l'affichage de l'une ou l'autre des données de localisation peut être effectué par des boutons de sélection 106 chacun associé à un affichage d'un type déterminé de données parmi les différentes données de localisation.

Les données de localisation provenant du navire laboratoire et/ou les données de localisation générées par le système de localisation 39 hydroacoustique et/ou des données de localisation compilant ces deux types de données peuvent être utilisées pour une commande en positionnement automatique ou semi-automatique du dispositif de maintenance. L'officier naviguant dispose ainsi d'un outil automatisé de contrôle de sa position.

Le dispositif de commande est piloté par une interface homme-machine comprenant des commandes de barre de direction 69 reliée à une interface de communication 64 du module de commande 8 et des commandes de propulsion 70 reliée à une interface de communication 63 du module de commande 8.

Un programme de gestion des consignes P80 gère ces deux dernières interfaces de communication 63 et 64 pour générer des données mémorisées D81 de commande du système propulseur. Ces données de commande D81 sont transmises, via une interface de communication 60, sous la forme d'un signal de commande C57 à un module de puissance 56 générant une commande pour le système propulseur.

L'officier naviguant dispose également, sur son terminal opérateur, de divers boutons de commandes 71 et une ou plusieurs manettes 72 de commandes. Les signaux reçus par ces interfaces sont mémorisés, par un programme de gestion d'instructions, sous la forme de données D83 et D84. Ces données D83 et D84 sont traitées par le programme P85 de gestion des instructions d'une part pour modifier les données D77 d'affichage à l'écran. Ainsi les commandes D84 entrées sur le terminal opérateur apparaissent dans une ligne de commande 68, de même que les résultats de calcul découlant de l'exécution de cette commande.

Les données D83 générées par un curseur 72 peuvent permettre l'affichage d'un curseur mais permettent aussi la génération d'opération de repérage sur le plan affiché et de calcul dont le résultat est affiché ensuite à l'écran.

D'autre part le programme P85 de gestion des instructions peut modifier les données D81 de commande du positionnement du dispositif de maintenance 1. Ainsi le dispositif de maintenance peut être piloté avec précision manuellement, semi automatiquement ou automatiquement.

Il doit être évident pour l'homme du métier que la présente invention permet d'autres variantes de réalisation. Par conséquent, les présents modes de réalisation doivent être considérés comme illustrant l'invention.

## Revendications

1. Dispositif de maintenance (1) comprenant un corps (2) relié à un outil de maintenance (21) appliqué le long de d'une flûte sismique (4) déployée à la surface de l'eau ou à faible profondeur, l'outil de maintenance (21) comprenant un passage dans lequel la flûte sismique (4) coulisse pour son entretien, **caractérisé en ce que** le corps (2) est un corps flottant sur l'eau (3), le dispositif de maintenance (1) comprenant au moins :
- un système propulseur (5, 6, 7) piloté par un module de commande (8),
- un support (28) de l'outil de maintenance (21) solidaire du corps (2) et supportant l'outil de maintenance (21) dans au moins une position fixe et déportée latéralement par rapport au corps.

2. Dispositif de maintenance (1) selon la revendication 1, **caractérisé en ce que** l'outil de maintenance (21) comprend au moins une brosse (25) ou un système (27) de pulvérisation agissant sur la flûte sismique (4) coulissant dans le passage de l'outil de maintenance (21).

3. Dispositif de maintenance (1) selon l'une des revendications précédentes, **caractérisé en ce que** le support (28) comprend au moins un élément mobile en translation sensiblement parallèlement à une plateforme d'intervention (14) aménagée sur le corps, l'outil de maintenance (21) étant mobile selon une direction transversale à la direction d'avance du dispositif de maintenance.

4. Dispositif de maintenance (1) selon l'une des revendications précédentes, **caractérisé en ce qu'**il comprend au moins un bras de levage (19) à l'extrémité duquel est fixé un préhenseur (20).

5. Dispositif de maintenance (1) selon la revendication 4, **caractérisé en ce que** le bras de levage (19) et le préhenseur (20) sont agencés de façon à permettre au moins un positionnement du préhenseur dans l'alignement de l'outil de maintenance et un positionnement du préhenseur décalé latéralement par rapport à l'outil de maintenance.

6. Dispositif de maintenance (1) selon la revendication 4 ou 5, **caractérisé en ce que** le bras de levage (19) et le préhenseur (20) sont agencés de façon à permettre au moins un positionnement du préhenseur (20) à la hauteur de l'outil de maintenance (21) et un positionnement du préhenseur (20) décalé en hauteur par rapport à l'outil de maintenance (21).

7. Dispositif de maintenance (1) selon l'une des revendications 4 à 6, **caractérisé en ce que** le bras de levage (19) est un bras articulé mobile selon plusieurs axes et comprend une portion télescopique extensible à l'extrémité de laquelle est fixé le préhenseur (20).

8. Dispositif de maintenance (1) selon l'une des revendications précédentes, **caractérisé en ce qu'**il comprend un système de localisation (39, 11) de la flûte sismique (4) transmettant au module de commande (8) un signal (S12) représentatif de la position du dispositif de maintenance (1) par rapport à ladite flûte (4) en fonction duquel le module de commande pilote une distance (L112) et une vitesse d'intervention entre ladite flûte sismique (4) et le corps du dispositif de maintenance.

9. Dispositif de maintenance (1) selon la revendication 8, **caractérisé en ce que** le système de localisation comprend au moins un émetteur (9) et un récepteur (10) hydroacoustiques fixés au corps (2) et en communication avec au moins une balise (11) fixée à ladite flûte sismique (4), le signal (S12) transmis par le système de localisation (39, 11) étant représentatif d'une position et d'une vitesse du dispositif de maintenance (1) par rapport à ladite balise (11) dans un repère à au moins deux dimensions.

10. Dispositif de maintenance (1) selon la revendication 8 ou 9, **caractérisé en ce que** le module de commande (8) règle automatiquement la vitesse du dispositif de maintenance (1) par rapport à celle de la flûte sismique (4) en fonction du signal (S12) représentatif de la position du dispositif de maintenance (1) par rapport à ladite flûte (4).

11. Dispositif de maintenance (1) selon l'une des revendications précédentes, **caractérisé en ce que** le système propulseur (5, 6, 7) comprend au moins un hydrojet.
